# EUROPEAN PATENT SPECIFICATION

(11) **EP 3 532 383 B1**
(45) Date of publication and mention of the grant of the patent: **19.05.2021**
(21) Application number: 17792154.1
(22) Date of filing: 26.10.2017
(51) Int. Cl.: B64D 11/06

(54) **A PASSENGER SEATING ARRANGEMENT WITH A STOWABLE ARMREST**
PASSAGIERSITZANORDNUNG MIT VERSTAUBARER ARMLEHNE
AGENCEMENT DE SIÈGE DE PASSAGER AVEC ACCOUDOIR ESCAMOTABLE

(30) Priority: 28.10.2016 GB 201618273
(43) Date of publication of application: 04.09.2019
(73) Proprietor: Acumen Design Associates Limited, London WC1V 7BD (GB)
(72) Inventor: DRYBURGH, Ian Hamilton, London WC1V 7BD (GB)
(74) Representative: Abel & Imray
(86) International application number: PCT/GB2017/053233
(87) International publication number: WO 2018/078375

(56) References cited:
- WO-A1-2015/155687
- US-A1- 2014 361 585
- US-A1- 2015 284 088
- US-A1- 2015 360 783

## Description

### Technical Field

The present invention concerns an aircraft cabin comprising a passenger seating arrangement and more particularly, a passenger seating arrangement with a stowable armrest.

### Background of the Invention

In a premium (business class or first class) aircraft passenger seating arrangement it is necessary to balance the desire to optimise the passenger experience with the desire not to compromise the packing efficiency of the seating units within the cabin. Certain furniture for example amenity furniture such as tables and armrests, whilst desirable, can be particularly spaceconsuming within a premium seating layout.

Moveable tables are well known in passenger seating, and it is well known to provide a seat unit with a movable table that can be stowed and deployed for use as required. An example table is shown in WO2013142183 (BE Aerospace) which discloses a passenger suite with a cantilevered table top. The table top is configured to move between a distal position forward of the seat and an over-seat position by means of a linear slide mounted on a side wall. The table top is also configured to pivot to a vertical position and to move from that vertical position along a vertical guide rail, to a retracted position for stowing.

Armrests tend to be fixed to the seat unit, for example GB2326824, or US7178871 (British Airways). There are limited examples of movable armrests. For example, WO200054104 (Newberry et al) discloses an arrangement in which an armrest is rotated down from a vertical to a horizontal position, and US2016/0272323 (Zodiac) discloses an arrangement in which an armrest slides up/down from/into a retracted position in which it is aligned with a bed surface.

WO 2015/155687, upon which the pre-amble of claim 1 is based, discloses a seat unit configured to transition between a seat position and a bed position. The upper seat back cushion and the lower seat back cushion are separated by a gap located between an end of each cushion when the at least one seat is in the seat position. In contrast, the ends of the cushions are flush with each other when the at least one seat is in the bed position.

US 2015/0284088 discloses a table arrangement for use in an aircraft seat module, the table arrangement comprising a first table element suitable for being movably mounted to a mounting structure of the aircraft seat module, the first table element being provided with a first table surface, and a second table element provided with a second table surface substantially parallel to the first table surface.

There remains a desire for improved passenger amenities, especially armrests, whilst not compromising space-efficiency in an aircraft cabin.

### Summary of the Invention

According to a first aspect of the invention there is provided an aircraft cabin comprising a passenger seating arrangement installed in the aircraft cabin, having the features of claim 1. Optional but preferred features are set out in the dependent claims. There is provided a passenger seating arrangement comprising a column of seat units adjacent an aisle, and the column of seat units and the aisle both extending in a longitudinal direction parallel to the longitudinal axis of the aircraft cabin, the column comprising a multiplicity of seat units, the seat units being arranged consecutively along the longitudinal direction. Each consecutive seat unit alternates between: an inwardly-facing seat unit angled at an acute angle to the longitudinal axis of the aircraft cabin and facing inwardly towards the aisle; and an outwardly-facing seat unit angled at the same acute angle to the longitudinal axis of the aircraft cabin but facing outwardly away from the aisle. Each seat unit is configurable between a seating configuration and a flat-bed configuration, and each seat unit comprises a foot-receiving end, the foot-receiving end defined by a fixed structure, and wherein the foot-receiving end of each inwardly-facing seat unit houses a retractable armrest which is configurable between (i) a stowed position in which the armrest is substantially within the footprint of the foot-receiving end and (ii) a deployed position in which the armrest extends to one side away from the foot-receiving end, towards an adjacent outwardly-facing seat unit, such that the armrest is for use by a passenger in the adjacent outwardly-facing seat unit.

Embodiments of the invention exploit the fact that in an alternating herringbone seating arrangement the foot-receiving end of the inwardly-facing seat unit is adjacent the outwardly-facing seat unit. The present invention recognises that it can therefore be used to provide an armrest for use by a passenger in the outwardly-facing seat unit. Embodiments of the invention also recognise that the foot-receiving end is typically suitable for housing an armrest within its footprint (i.e. it can be have a sufficiency large footprint). Thus an armrest can be stowed in the foot-receiving end when not required, and optionally deployed for use as desired. The foot-receiving end is utilised in a new way, to provide additional amenities for a passenger in the adjacent seat unit, thus improving the passenger experience whilst not compromising packing efficiency in a premium class lay-out. The present invention also recognises that secondary furniture of one seat unit may be used in such a way so as to provide amenities to a passenger in a different, adjacent, seat unit.

Each seat unit is positioned at an acute angle with respect to the longitudinal axis of the aircraft cabin. In other words, the inwardly and outwardly-facing seat units are arranged in an alternately-facing herringbone arrangement. The acute angle at which the inwardly-facing seat unit is orientated with respect to the longitudinal axis of the aircraft cabin, is preferably of substantially identical magnitude to the acute angle at which the outwardly-facing seat unit is orientated with respect to the longitudinal axis of the aircraft cabin. The seats units are thus preferably aligned in parallel (with each other) along the column. The exact value of the acute angle of the seats relative to the longitudinal axis of the aircraft may depend on the size of the aircraft cabin in question. However, the present invention has recognised certain beneficial ranges of acute angle. The acute angle may be at least 30 degrees or more, and more preferably the acute angle is at least 34 degrees or more. The acute angle may be at least 45 degrees or more. The acute angle may be up to 50 degrees. The acute angle may be in the range of 34 to 50 degrees.

A re-configurable seat unit per se is well known in aircraft seating, especially in premium class seating. Such a seat unit may sometimes be referred to as a "lie-flat seat" and that aspect per se is not discussed herein in further detail.

The foot-receiving end is preferably configured to receive a passenger's feet when the seat unit is in the flat-bed configuration. The foot-receiving end may comprise an end wall extending along at least part of a perimeter of the foot-receiving end. The end wall may define a partially enclosed space for receiving a passenger's feet when the seat unit is in the flat-bed configuration.

The foot-receiving end may comprise an ancillary bed surface. The ancillary bed surface may be coplanar with the sleeping surface when the seat unit is in the flat-bed configuration, such that the ancillary bed surface acts as a bed-extension surface. The ancillary bed surface may be fixed. The ancillary bed surface may be suitable as a foot rest when the seat unit is in a seating configuration. For example, the foot-receiving end may comprise an ottoman.

The foot-receiving end may not have any ancillary bed surface. For example, it may merely receive a surface (for example one of the moveable seating surfaces) that forms part of the main body and extends into the foot-receiving end when the seat unit is in the flat-bed configuration.

The foot-receiving end may comprise an upper table surface. The upper table surface may be located at a height greater than the height of the flat sleeping surface when the seat unit is in the flat-bed configuration. The upper table surface may be for use by the passenger in the adjacent seat unit. Such an arrangement has been found to provide an especially efficient use of space as the foot-receiving end can effectively provide a functional benefit to two seat units (i.e. to receive a passenger's feet in one seat unit, and to provide a table surface for a different passenger in the adjacent seat unit). The foot-receiving end may comprise a divider shielding and/or preventing access, to the upper table surface from/by a passenger of that seat unit. Such an arrangement provides a clear delimitation of space between the passengers of the seat units. An in-flight entertainment (IFE) display may be associated with the divider.

The foot-receiving end of each outwardly-facing seat unit may border the aisle.

The retractable armrest is preferably fully retractable. The armrest may be configurable for movement to a partially deployed position in which part of the armrest is within the footprint of the foot-receiving end.

Each of the features described in relation to the inwardly-facing seat unit may equally apply to one or more of the outwardly-facing seat units. For example, the foot-receiving end of each outwardly-facing seat unit may house a retractable armrest, the retractable armrest being configurable between (i) a stowed position in which the armrest is substantially within the footprint of the foot-receiving end and (ii) a deployed position in which the armrest extends to one side away from the foot-receiving end, towards an adjacent inwardly-facing seat unit, such that the armrest provides am armrest surface for use by a passenger in the adjacent inwardly-facing seat unit. It will be appreciated that features described herein to the armrest of one of the inwardly or outwardly-facing seat units may be equally applicable to the other of the inwardly or outwardly-facing seat units in the arrangement. It will also be appreciated that 'extending to one side away from the foot-receiving end' refers to the armrest being deployed either to the left of, or to the right of the foot-receiving end, when viewed in plan-view.

An arrangement in which the foot-receiving end of each inwardly and each outwardly-facing seat unit houses a retractable armrest may be particularly useful in a 'twin-aisle' arrangement, in which there may be a requirement for access to the seats in the column from more than one aisle.

Even in 'single-aisle' arrangements in which there may be less need to have a retractable armrest for use by passengers in the inwardly-facing seat units (see comments below regarding the use of the access path), such an arrangement may be beneficial as it may ensure an equal 'passenger offer' (i.e. the same passenger experience) which may provide advantages with respect to marketing/pricing.

Each seat unit may comprise a seat body. The seat body may comprise moveable seating elements arranged such that when the seat unit is in the seating configuration the seating elements form a passenger seat but when the seat unit is in the flat-bed configuration, the seating elements form a substantially flat sleeping surface.

The moveable seating elements may, for example, comprise a seat pan, a seat back, and/or a footrest. The moveable seating elements may form substantially all of the sleeping surface when the seat unit is in the flat-bed configuration. However, the moveable elements need not necessarily form all of the sleeping surface when the seat unit is in the flat-bed configuration. For example, each seat unit may comprises an ancillary bed surface. In the flat bed configuration, the ancillary bed surface may form part of the sleeping surface in conjunction with the moveable seating elements. The ancillary bed surface may be fixed. The ancillary bed surface may be removable (for example it may be created by an insert element). The ancillary bed surface may be at a height such that it is co-planar with the flat sleeping surface formed by seating elements when the seat unit is in the flat-bed configuration. The ancillary bed surface may form an extension of the flat sleeping surface formed by seating elements when the seat unit is in the flat-bed configuration. A seat unit may comprise such an ancillary bed surface at a foot-receiving end of the seat unit. Alternatively or additionally, the seat unit may comprise such an ancillary bed surface at a head-receiving end of the seat unit.

Each seat unit may comprise a central axis. The central axis preferably extends through the centre of the seat (for example it may bisect a seat pan and/or backrest of the seat when in the seating configuration). The central axis of each seat unit is preferably fixed (for example the seat units preferably do not comprise swivel seats). The angle of the seat unit is preferably defined as the angle between the central axis and the longitudinal axis of the aircraft cabin.

In some embodiments of the invention, both the inwardly-facing seat units and the outwardly-facing seat units may have any or all of the above-mentioned features. However, in other embodiments of the invention, the inwardly-facing seat units may have different features and/or differently shaped features, to the outwardly-facing seat units.

The outwardly-facing seat units may be facing one of forwards or backwards. The inwardly-facing seat units may be facing the other of forwards or backwards. It will be appreciated that the inward/outward facing of the seat unit refers to the orientation relative to the aisle (i.e. whether the passenger would be facing towards or away from the aisle). In contrast, the forward/backward facing of the seat unit refers to the orientation relative to the direction of travel of the aircraft (i.e. whether the passenger would be facing towards the front of the aircraft or towards the rear of the aircraft).

In the deployed position, each armrest may extend towards the seat body of the adjacent seat unit. Such an arrangement may ensure that the armrest is easily reachable by a passenger sitting in the adjacent seat unit in the seating configuration.

Each seat unit may be accessible from the aisle by an access path. The access path may be such that a passenger can pass from the aisle, through the access path, to access the seat unit. The access path to each outwardly-facing seat unit may be located between the seat body of that seat unit and the foot-receiving end of the adjacent inwardly-facing seat unit.

In the deployed position, the armrest of the foot-receiving end of each inwardly-facing seat unit may extend over the access path to the adjacent outwardly-facing seat unit. The armrest may extend over most or all, of the access path to the adjacent outwardly-facing seat unit, such that it is no longer useable as an access path when the armrest is deployed. Embodiments of the present invention recognise that in an acute angle seating arrangement with alternately inwardly and outwardly-facing seat units (i.e. an alternately facing herringbone arrangement), the space apportioned for an access path to the outwardly-facing seat unit, may not be needed specifically for access when the passenger is sitting in the seat. The access path may therefore be a convenient space within reach of a passenger sitting in the outwardly-facing seat, into which an armrest may be deployed. Such an arrangement may advantageously reduce redundant space in the aircraft cabin.

In an arrangement in which the foot-receiving end of each outwardly-facing seat unit also houses a retractable armrest, that armrest may extend over, at least partially, the access path to the adjacent inwardly-facing seat unit in the deployed position. Such a feature may be especially beneficial in a 'twin-aisle' arrangement.

The armrest is configured to move between the stowed and deployed positions within a single plane.

The armrest may be substantially planar (for example it may define a substantially planar upper surface). There may be only a single plane which defines the plane of movement and the plane of the armrest when it is deployed. The plane of movement may be substantially parallel to the floor of the cabin. The plane of movement may be substantially parallel to the plane of the seat unit in the flat-bed configuration. The plane of movement may be substantially horizontal in an absolute frame of reference. The plane of movement may be substantially parallel to the seat pan.

The planar movement of the armrest may be realized in a number of ways. In some embodiments, the armrest may be configured to move by rotation about an axis. The axis of rotation may be substantially vertical.

The armrest may be configured to be operable between the stowed and deployed positions by a passenger sitting in the adjacent seat unit. The armrest may be configured to be deployed via rotation about an axle (i.e. to pivot). The axis of the pivot may be perpendicular to the plane of movement and/or the plane of the armrest when deployed. The axis of the pivot may be located within the footprint of the foot-receiving end. Such a pivoting mechanism may be simple for a passenger to operate, when sitting or lying in the seat. The armrest may comprise a handle and/or a cord and/or a button to initiate its release. The armrest may alternatively or additionally be deployed via another mechanism.

The armrest may be biased towards the stowed position. The armrest may comprise a locking member for holding the armrest in the deployed position such that when the locking member is released, the armrest moves from the deployed position to the stowed position under a biasing force. Such an arrangement may provide a useful safety feature, should the passenger need to quickly exit the seat. Such a feature may also or alternatively enable the armrest to be used by passengers having impaired mobility.

In the deployed position the armrest may be positioned primarily to one side of the seat body of the adjacent seat unit. The armrest may be arranged not to, for example, be deployed in front of the seat body.

In the deployed position the armrest may be located alongside the seat body of the adjacent seat unit. In the deployed position, the armrest may partially overlap the footprint of the seat body of the adjacent seat unit in the seating configuration. Such overlap may be along one side of the seat body. The partial overlap may be small compared to the footprint of the seat unit, for example less than 10%, or even 5% in the seating configuration.

Each inwardly-facing seat unit may be substantially identical to each outwardly-facing seat unit. Thus, the column may be formed from a repeating pattern of (alternately oriented) identical seat units. Each pair of seat units (formed of one inwardly and its adjacent outwardly-facing seat unit) may be identical. The pairs of seat units may be adjacent one another along the longitudinal direction. Within each column, the pairs of seat units may be arranged in the same orientation.

According to a second aspect of the invention, there is provided a pair of seat units for use in the seating arrangement described herein. The pair of seat units is suitable for being arranged adjacent to another identical pair of seat units along a longitudinal direction parallel to the longitudinal axis of the aircraft cabin. Each pair of seat units comprises: an inwardly-facing seat unit angled at an acute angle to the longitudinal axis of the aircraft and facing inwardly towards an aisle; and an outwardly-facing seat unit angled at the acute angle to the longitudinal axis of the aircraft but facing outwardly away from the aisle; wherein, each seat unit is configurable between a seating configuration and a flat-bed configuration, and each seat unit comprises a foot-receiving end, the foot-receiving end defined by a fixed structure, and wherein the foot-receiving end of each inwardly-facing seat unit houses a retractable armrest which is configurable between (i) a stowed position in which the armrest is substantially within the footprint of the foot-receiving end and (ii) a deployed position in which the armrest extends to one side away from the foot-receiving end, towards the adjacent outwardly-facing seat unit, such that the armrest may provide a surface for use by a passenger in the adjacent outwardly-facing seat unit.

It will of course be appreciated that features described in relation to one aspect of the present invention may be incorporated into other aspects of the present invention.

### Description of the Drawings

An embodiment of the present invention will now be described by way of example only with reference to the accompanying drawings:
- Figure 1: is a plan view of a passenger seating arrangement according to the example embodiment of the invention;
- Figure 2: is a perspective view of the passenger seating arrangement of Figure 1, with armrests stowed;
- Figure 3: is a perspective view of the passenger seating arrangement of Figure 1, with two armrests deployed;
- Figure 4: is a perspective view of the passenger seating arrangement of Figure 1, with armrests stowed and seat units in the flat-bed configuration;
- Figure 5: is a perspective view of an outwardly-facing seat unit of the passenger seating arrangement of Figure 1 in an aircraft cabin, with armrest deployed;
- Figure 6: is a perspective view of an inwardly-facing seat unit of the passenger seating arrangement of Figure 1, with armrest deployed;
- Figure 7: is a plan view showing the passenger seating arrangement of Figures 1 to 6 within the business-class cabin of a single-aisle aircraft.

### Detailed Description

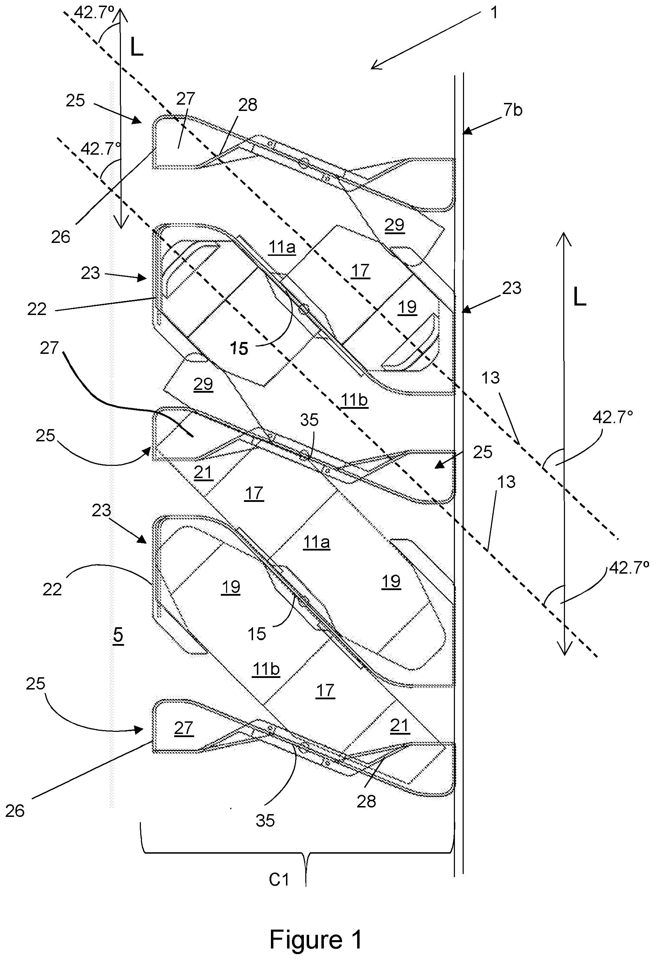

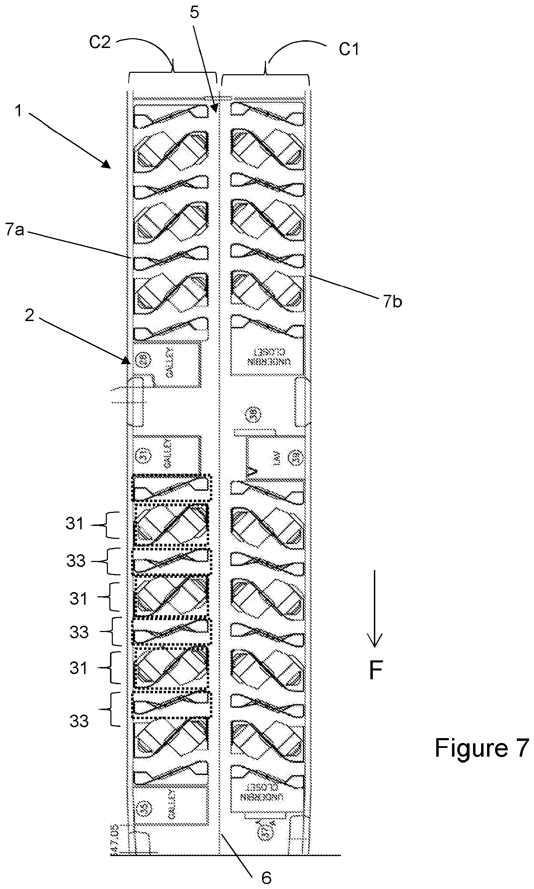

Figure 1 is a schematic plan view of part of a passenger seating arrangement 1 according to an embodiment of the invention. The passenger seating arrangement 1 is within the business class section of an aircraft cabin 2 (shown in Figure 7).

The passenger seating arrangement 1 comprises a column C1 of seat units. As shown in Figure 7, the column C1 is positioned in the aircraft cabin adjacent a second column of seat units C2. The columns C1 and C2 are separated by a central aisle 5 aligned with the longitudinal axis 6 of the cabin. As is most clearly indicated in Figure 7, the columns C1, C2 of seat units and the aisle 5 all extend in a longitudinal direction parallel to the longitudinal axis 6 of the cabin 2. The aircraft cabin is defined by sidewalls 7a, 7b. The cabin 2 comprises several non-seating areas, such as galleys and lavatories, but these are largely conventional and are not described further herein.

Referring back to Figure 1, column C1 comprises seat units 11a, 11b, which are substantially identical except for their orientation/position. The seat units 11a, 11b, are arranged adjacent to one another along the longitudinal direction (i.e. neighbouring seat units 11a, 11b are located along the length of each column C1, C2) and alternate in orientation between an inwardly-facing seat unit 11a (facing inwardly towards the aisle) and an outwardly-facing seat unit 11b (facing outwardly away from the aisle 5).

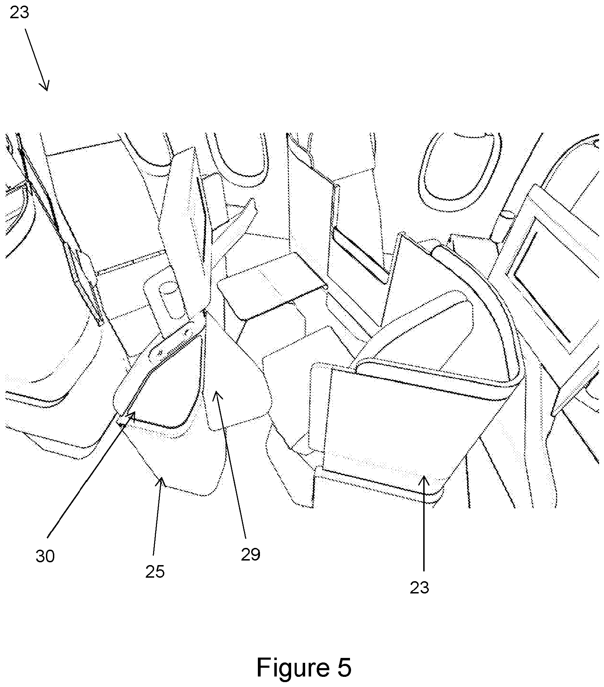

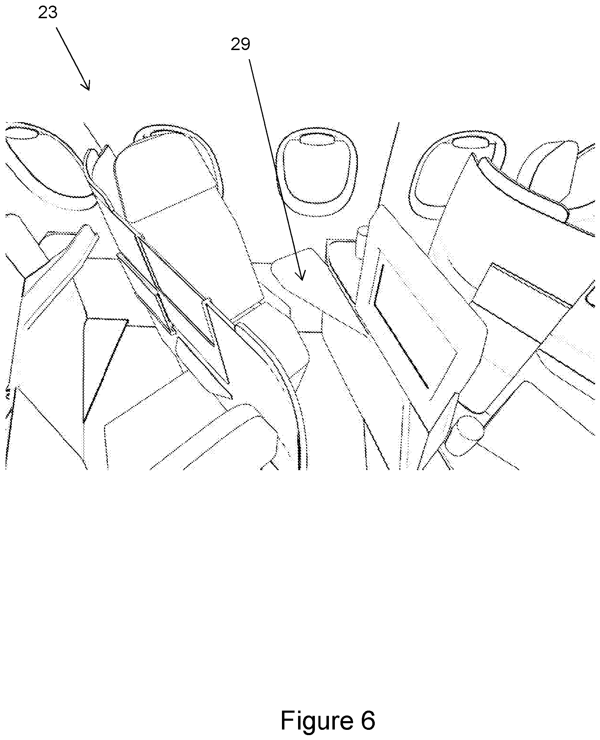

In the description below, where reference is made to only one seat unit (i.e. one of 11a or 11b), it will be appreciated that the description applies equally to the other corresponding seat units 11a, 11b in the seating arrangement 1. Also, for the sake of clarity, not all reference numerals used in certain of Figures 1-7 are necessarily repeated in the other of the Figures. The seat units shown in Figures 1-7 but not labelled, do of course have the same features.

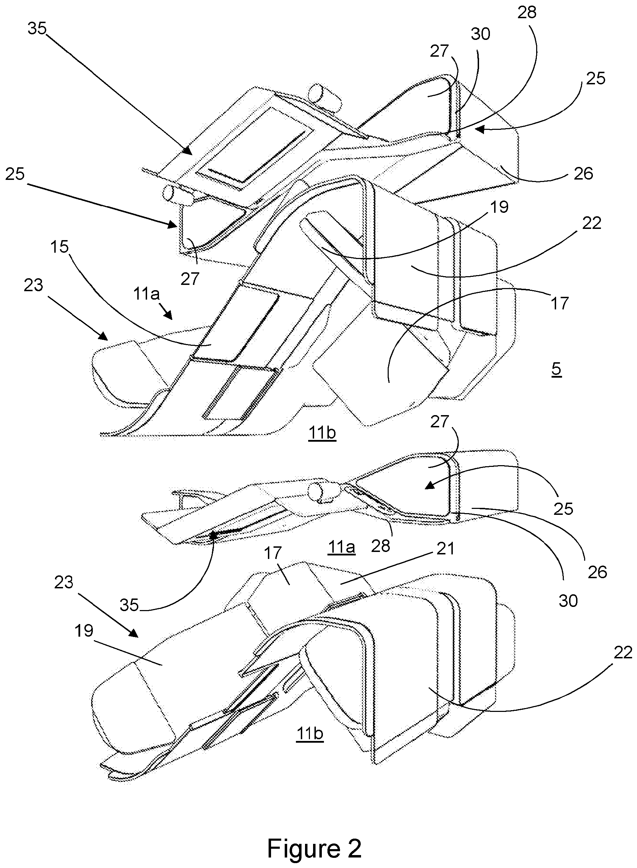

Figures 2 to 4 each show an inwardly-facing seat unit 11a and an outwardly-facing seat unit 11b, which together form a pair 9 of seat units. The inwardly-facing seat unit 11a is angled at 42.7 degrees to the longitudinal direction L (which is parallel to the longitudinal axis 6 of the cabin) and faces inwardly towards the aisle 5. The outwardly-facing seat unit 11b is angled at the same angle (42.7 degrees) to the longitudinal direction but faces outwardly away from the aisle 5.

The angle of the seat unit to the longitudinal direction is measured by the angle that the central seat unit axis 13 makes with the longitudinal direction L (and the aisle axis 6). The central axis of a seat unit is the axis that bisects the seat body of the respective seat unit 11a/11b.

The inwardly-facing seat unit 11a faces backwards (relative to the direction of flight F (see Figure 7)), whereas the outwardly-facing seat unit faces forwards (relative to the direction of flight F).

The inwardly-facing seat unit 11a and outwardly-facing seat unit 11b in each pair 9 of seat units, border each other along an intra-pair privacy screen 15 that defines a shared boundary (see Figure 1). That boundary runs parallel to the central axis 13 of the seat units (i.e. at 42.7 degrees to the longitudinal direction). The privacy screen 15 is selectively retractable such that it can be raised or lowered depending on whether passengers in the seat units wish to interact with each other.

Each seat unit 11a, 11b comprises a main body 23 and a foot-receiving end 25. The main body 23 has a moveable seat pan 17, movable back rest 19 and moveable leg support 21. A shroud 22 surrounds the back rest 19. The foot receiving end 25 is spaced apart from the main body 23 and is in the form of a curved end wall 26 extending from the cabin floor having an upper table surface 27. The foot receiving end does not comprise an ottoman. Instead, the end wall 26 defines a partially enclosed space into which the passenger may insert their feet when the seat unit is in the flat-bed configuration. A low divider 28 shields the table surface 27 from the passenger in that seat unit 11a, 11b, but the table surface 27 is instead accessible to the passenger in the adjacent seat unit, thereby providing a convenient surface to one side of their seat unit.

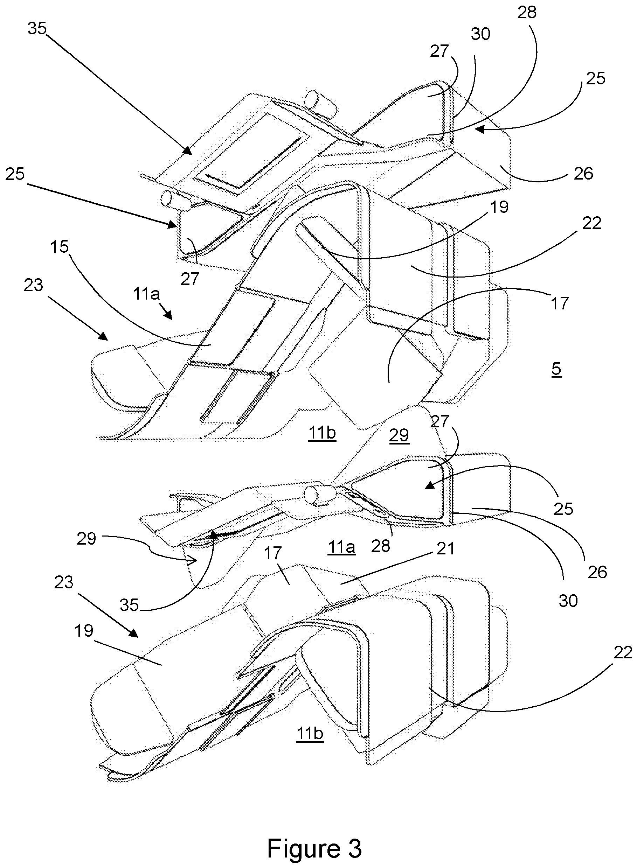

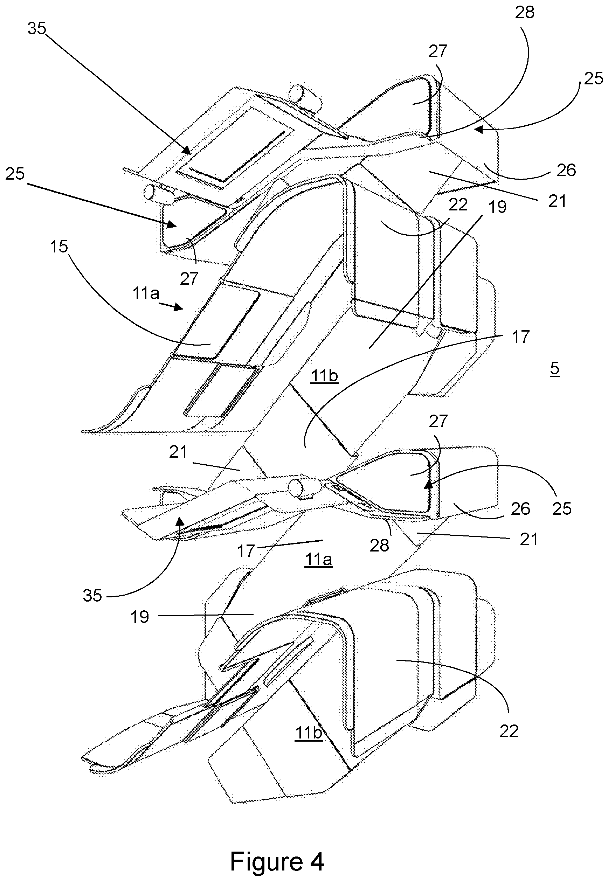

Each seat unit 11a, 11b is configurable between a seating configuration and a flat-bed configuration. In the seating configuration (shown in Figures 2 and 3) the moveable elements 17, 19, 21 of the main body 23 form an upright passenger seat with the foot-receiving end 25 located in front of the seat. The moveable seat pan 17, movable back rest 19 and moveable leg support 21 may, however, be configured into a 1,905 m (75 inch) long flat sleeping surface (shown in Figure 4) such that the seat unit is in a flat-bed configuration. In that flat-bed configuration, the moveable elements are all coplanar and the leg rest 21 extends into the space enclosed by the wall 26 of the foot receiving end 25. The use of moveable seat elements and conversion between a seating configuration and a lie-flat configuration is known per se and will not be described in further detail herein. The benefits enabled by embodiments of the present invention tend to instead reside in other aspects of the seat units, and their layout, as will now be described in more detail.

In the embodiment described, the seating arrangement 1 is provided in a single-aisle aircraft. Each column C1, C2 borders the aisle 5 on one (inner) side and the aircraft sidewall on the other (outer) side. Providing columns C1, C2 of seat units having alternately facing inward and outward seats units 11a, 11b (relative to the aisle) has been found to be an especially space-efficient way of providing passenger seating on a single-aisle aircraft, without compromising passenger access to each seat unit.

As is most clearly shown in Figure 7, the respective main bodies 23 of seat units 11a, 11b, are arranged as a series of modules 31 spaced along the length of each column. The foot-receiving end 25 of the inwardly-facing seat unit 11a and the foot-receiving end 25 of the adjacent outwardly-facing seat unit 11b are also arranged as a series of modules 33, alternately located along the longitudinal direction of each column, between the main body modules 31. Providing separate modules for the main bodies 23 of the seat units 11a, 11b and the foot-receiving ends 25 is advantageous because then they can be constructed to different standards with respect to certification. Specifically, since the main body modules 31 contain the passenger when seated, they are therefore certified to 16-g, but the foot-receiving end modules 33 do not house the passenger when seated, and can therefore be certified to a lower g loading (9-g in this case).

The end wall 26 of the foot-receiving end is asymmetrical (about the centre-line of the foot-receiving end). On one side, it smoothly blends into an inter-pair privacy screen 35, which is orientated at angle to the central axis 13 of the seat units 11a, 11b. Such an arrangement has been found to be beneficial as it may enable a relatively wide spacing to be created between the foot-receiving end 25 of one seat unit and the main body 23 of an adjacent seat unit.

The foot-receiving end 25 of each inwardly-facing seat unit 11a (and each outwardly-facing seat unit 11b) includes, just beneath its upper surface, a slot recess 30 extending substantially through the cross-section of the foot-receiving end 25. The recess 30 is closed on the internal side of the foot-receiving end 25 i.e. the side facing the seat body 23 of the seat unit to which the foot-receiving end 25 belongs, and open on the other side i.e. the external side of the foot-receiving end 25 facing the adjacent seat unit.

Housed within the recess is an armrest 29. The armrest 29 is sized and shaped to fit snugly within the slot recess 30. The armrest 29 is broadly triangular, being narrower towards the centre of the seat unit, and wider towards the end of the seat unit. In its stowed position, the armrest 29 fits completely within the recess 30 so that it is contained entirely within the footprint of the foot-receiving end 25. The armrest 29 moves freely about a pivot at its inner corner (i.e. the point most inward of the aisle). The pivot pin is oriented perpendicular to the plane of the armrest 29, so that the armrest 29 moves in a single plane. The plane of the armrest 29 in the embodiment described is parallel to the plane of the seat unit in the flat-bed configuration.

The armrest 29 is prevented from rotating away from the foot-receiving end 25 by means of a lip (not shown), which catches on the upper edge of the slot recess 30 when the armrest 29 is in its fully extended position. The armrest 29 therefore rotates freely to a position of maximum rotation beyond which it does not rotate. That position of maximum rotation is the deployed position.

In the position of maximum rotation (the deployed position) the armrest 29 of each inwardly-facing seat unit extends over the access path from the aisle 5 to the adjacent outwardly-facing seat unit 11b. The armrest 29 overlaps slightly the seat body of the outwardly-facing seat unit 11b. The overlap is small, so that only a small portion of the armrest 29 and seat pan 17 is covered by the armrest 29. Since the seat bodies 23 of the inwardly-facing seat units 11a are adjacent a sidewall of the aircraft, the armrests 29 which extend towards those seats (i.e. from the foot-receiving ends 25 of the adjacent outwardly-facing seat units 11b) do not block any access path, but instead make use of space which would otherwise be redundant.

Whilst the present invention has been described and illustrated with reference to a particular embodiment, it will be appreciated by those of ordinary skill in the art that the invention lends itself to many different variations not specifically illustrated herein. Reference should be made to the claims for determining the true scope of the present invention. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. An aircraft cabin comprising a passenger seating arrangement (1) installed in the aircraft cabin, the passenger seating arrangement comprising a column of seat units (C1) adjacent an aisle (5), and the column of seat units (C1) and the aisle (5) both extending in a longitudinal direction parallel to the longitudinal axis of the aircraft cabin,
the column (C1) comprising a multiplicity of seat units, the seat units being arranged consecutively along the longitudinal direction, and wherein each consecutive seat unit alternates between:
an inwardly-facing seat unit (11A) angled at an acute angle to the longitudinal axis of the aircraft cabin and facing inwardly towards the aisle;
an outwardly-facing seat unit (11B) angled at the same acute angle to the longitudinal axis of the aircraft cabin but facing outwardly away from the aisle; and
each seat unit is configurable between a seating configuration and a flat-bed configuration, and
each seat unit comprises a foot-receiving end (25), the foot-receiving end (25) defined by a fixed structure, and **characterised in that**,
the foot-receiving end (25) of each inwardly-facing seat (11A) unit houses a retractable armrest (29) which is configurable between (i) a stowed position in which the armrest (29) is substantially within the footprint of the foot-receiving end and (ii) a deployed position in which the armrest extends to one side away from the foot-receiving end, towards an adjacent outwardly-facing seat unit, such that the armrest (29) provides an armrest surface for use by a passenger in the adjacent outwardly-facing seat unit,
wherein the armrest (29) is configured to move between the stowed and deployed positions within a single plane, and
wherein each seat unit comprises a seat pan (17) and the armrest (29) is configured to move between the stowed and deployed positions within a plane which is above the seat pan of the adjacent seat unit.

2. An aircraft cabin according to claim 1, wherein each seat unit comprises a seat body, the seat body comprising moveable seating elements (17, 19) arranged such that when the seat unit is in the seating configuration the seating elements form a passenger seat but when the seat unit is in the flat-bed configuration, the seating elements form a substantially flat sleeping surface.

3. An aircraft cabin according to claim 2 wherein in the deployed position, the armrest (29) extends towards the seat body of the adjacent outwardly seat unit.

4. An aircraft cabin according to any preceding claim wherein each seat unit is accessible from the aisle (5) by respective access path, and wherein in the deployed position, the armrest (29) of the foot-receiving end (25) of each inwardly-facing seat unit extends over the access path to the adjacent outwardly-facing seat unit.

5. An aircraft cabin according to any preceding claim wherein the armrest is configured to be operable between the stowed and deployed positions by a passenger sitting in the adjacent outwardly-facing seat unit.

6. An aircraft cabin according to any preceding claim wherein the armrest (29) is biased towards the stowed position.

7. An aircraft cabin according to any preceding claim, wherein the foot-receiving end of each outwardly-facing seat unit (11b) also houses a retractable armrest (29), the retractable armrest being configurable between (i) a stowed position in which the armrest is substantially within the footprint of the foot-receiving end and (ii) a deployed position in which the armrest extends to one side away from the foot-receiving end, towards an adjacent inwardly-facing seat unit, such that the armrest provides an armrest surface for use by a passenger in the adjacent inwardly-facing seat unit.

8. An aircraft cabin according to claim 7, wherein each inwardly-facing seat unit (11a) is substantially identical to each outwardly-facing seat unit.

9. A pair of seat units for use in the aircraft cabin of any preceding claim, the pair of seat units being suitable for being arranged adjacent to another identical pair of seat units along a longitudinal direction parallel to the longitudinal axis of the aircraft cabin, and the pair comprising:
an inwardly-facing seat unit (11a) angled at an acute angle to the longitudinal axis of the aircraft and facing inwardly towards an aisle; and
an outwardly-facing seat unit (11b) angled at the acute angle to the longitudinal axis of the aircraft but facing outwardly away from the aisle; wherein
each seat unit is configurable between a seating configuration and a flat-bed configuration, and
each seat unit comprises a foot-receiving end (25), the foot-receiving end (25) defined by a fixed structure, and **characterised in that**
the foot-receiving end (25) of each inwardly-facing seat unit houses a retractable armrest (29) which is configurable between (i) a stowed position in which the armrest (29) is substantially within the footprint of the foot-receiving end and (ii) a deployed position in which the armrest (29) extends to one side away from the foot-receiving end, towards the adjacent outwardly-facing seat unit, such that the armrest may provide a surface for use by a passenger in the adjacent outwardly-facing seat unit, and
wherein the armrest (29) is configured to move between the stowed and deployed positions within a single plane, and
wherein each seat unit comprises a seat pan (17) and the armrest (29) is configured to move between the stowed and deployed positions within a plane which is above the seat pan of the adjacent seat unit.

## Patentansprüche

1. Flugzeugkabine, umfassend eine in einer Flugzeugkabine installierte Passagiersitzanordnung (1), wobei die Passagiersitzanordnung eine Reihe Sitzeinheiten (C1) neben einem Gang (5) umfasst und die Reihe Sitzeinheiten (C1) und der Gang (5) beide in einer Längsrichtung parallel zur Längsachse der Flugzeugkabine verlaufen,
die Reihe (C1) eine Mehrzahl von Sitzeinheiten umfasst, wobei die Sitzeinheiten hintereinander entlang der Längsrichtung angeordnet sind, und wobei die hintereinander befindlichen Sitzeinheiten sich abwechseln zwischen:
einer nach innen gewandte Sitzeinheit (11A), die in einem spitzen Winkel zur Längsachse der Flugzeugkabine angewinkelt ist und nach innen dem Gang zugewandt ist,
einer nach außen gewandte Sitzeinheit (11B), die in demselben spitzen Winkel zur Längsachse der Flugzeugkabine angewinkelt ist, jedoch nach außen dem Gang abgewandt ist, und
jede Sitzeinheit konfigurierbar ist zwischen einer Sitzkonfiguration und einer Flachbettkonfiguration, und
jede Sitzeinheit ein Fußaufnahmeende (25) umfasst, wobei das Fußaufnahmeende (25) durch eine feste Struktur definiert ist, und **dadurch gekennzeichnet, dass**
das Fußaufnahmeende (25) einer jeden nach innen gewandten Sitzeinheit (11A) eine versenkbare Armlehne (29) umfasst, die konfigurierbar ist zwischen (i) einer verstauten Position, in der sich die Armlehne (29) im Wesentlichen innerhalb der Grundfläche des Fußaufnahmeendes befindet, und (ii) einer aufgestellten Position, in der die Armlehne sich nach einer Seite weg vom Fußaufnahmeende in Richtung einer benachbarten nach außen gewandten Sitzeinheit erstreckt, so dass die Armlehne (29) eine Armlehnenfläche zur Benutzung durch einen Passagier in der benachbarten nach außen gewandten Sitzeinheit bereitstellt,
wobei die Armlehne (29) konfiguriert ist, um sich zwischen der verstauten und der aufgestellten Position innerhalb einer einzigen Ebene bewegen zu können, und
wobei jede Sitzeinheit eine Sitzschale (17) umfasst und die Armlehne (29) konfiguriert ist, um sich zwischen der verstauten und der aufgestellten Position innerhalb einer Ebene, die oberhalb der Sitzschale der benachbarten Sitzeinheit liegt, bewegen zu können.

2. Flugzeugkabine gemäß Anspruch 1, wobei jede Sitzeinheit einen Sitzkörper umfasst, wobei der Sitzkörper bewegliche Sitzelemente (17, 19) umfasst, die so angeordnet sind, dass wenn die Sitzeinheit sich in der Sitzkonfiguration befindet, die Sitzelemente einen Passagiersitz bilden, wenn jedoch die Sitzeinheit sich in der Flachbettkonfiguration befindet, die Sitzelemente eine im Wesentlichen flache Schlaffläche bilden.

3. Flugzeugkabine gemäß Anspruch 2, wobei in der aufgestellten Position die Armlehne (29) sich in Richtung des Sitzkörpers der benachbarten nach außen gewandten Sitzeinheit erstreckt.

4. Flugzeugkabine gemäß einem vorhergehenden Anspruch, wobei jede Sitzeinheit vom Gang (5) durch einen zugehörigen Zugangsweg zugänglich ist, und wobei in der aufgestellten Position die Armlehne (29) des Fußaufnahmeendes (25) einer jeden nach innen gewandten Sitzeinheit sich über den Zugangsweg zur benachbarten nach außen gewandten Sitzeinheit erstreckt.

5. Flugzeugkabine gemäß einem vorhergehenden Anspruch, wobei die Armlehne konfiguriert ist, um von einem Passagier, der in der benachbarten nach außen gewandten Sitzeinheit sitzt, zwischen der verstauten und der aufgestellten Position eingestellt werden zu können.

6. Flugzeugkabine gemäß einem vorhergehenden Anspruch, wobei die Armlehne (29) in Richtung der verstauten Position gelenkt wird.

7. Flugzeugkabine gemäß einem vorhergehenden Anspruch, wobei das Fußaufnahmeende einer jeden nach außen gewandten Sitzeinheit (11b) ebenfalls eine versenkbare Armlehne (29) umfasst, wobei die versenkbare Armlehne konfigurierbar ist zwischen (i) einer verstauten Position, in der sich die Armlehne im Wesentlichen innerhalb der Grundfläche des Fußaufnahmeendes befindet, und (ii) einer aufgestellten Position, in der die Armlehne sich nach einer Seite weg vom Fußaufnahmeende in Richtung einer benachbarten nach innen gewandten Sitzeinheit erstreckt, so dass die Armlehne eine Armlehnenfläche zur Benutzung durch einen Passagier in der benachbarten nach innen gewandten Sitzeinheit bereitstellt.

8. Flugzeugkabine gemäß Anspruch 7, wobei jede nach innen gewandte Sitzeinheit (11a) im Wesentlichen identisch ist mit jeder nach außen gewandten Sitzeinheit.

9. Paar Sitzeinheiten zur Verwendung in der Flugzeugkabine nach einem vorhergehenden Anspruch, wobei das Paar Sitzeinheiten geeignet ist, um neben einem anderen identischen Paar Sitzeinheiten entlang einer Längsrichtung parallel zur Längsachse der Flugzeugkabine angeordnet zu werden, und wobei das Paar umfasst:
eine nach innen gewandte Sitzeinheit (11a), die in einem spitzen Winkel zur Längsachse des Flugzeugs angewinkelt ist und nach innen dem Gang zugewandt ist, und
eine nach außen gewandte Sitzeinheit (11b), die in dem spitzen Winkel zur Längsachse des Flugzeugs angewinkelt ist, jedoch nach außen dem Gang abgewandt ist, wobei
jede Sitzeinheit konfigurierbar ist zwischen einer Sitzkonfiguration und einer Flachbettkonfiguration, und
jede Sitzeinheit ein Fußaufnahmeende (25) umfasst, wobei das Fußaufnahmeende (25) durch eine feste Struktur definiert ist, und **dadurch gekennzeichnet, dass**
das Fußaufnahmeende (25) einer jeden nach innen gewandten Sitzeinheit eine versenkbare Armlehne (29) umfasst, die konfigurierbar ist zwischen (i) einer verstauten Position, in der sich die Armlehne (29) im Wesentlichen in der Grundfläche des Fußaufnahmeendes befindet, und (ii) einer aufgestellten Position, in der die Armlehne (29) sich nach einer Seite weg vom Fußaufnahmeende in Richtung der benachbarten nach außen gewandten Sitzeinheit erstreckt, so dass die Armlehne eine Fläche zur Benutzung durch einen Passagier in der benachbarten nach außen gewandten Sitzeinheit bereitstellt, und
wobei die Armlehne (29) konfiguriert ist, um sich zwischen der verstauten und der aufgestellten Position innerhalb einer einzigen Ebene bewegen zu können, und
wobei jede Sitzeinheit eine Sitzschale (17) umfasst und die Armlehne (29) konfiguriert ist, um sich zwischen der verstauten und der aufgestellten Position innerhalb einer Ebene, die oberhalb der Sitzschale der benachbarten Sitzeinheit liegt, bewegen zu können.

## Revendications

1. Cabine d'aéronef comprenant un agencement d'assise de passager (1) installé dans la cabine d'aéronef, l'agencement d'assise de passager comprenant une colonne d'unités de siège (C1) adjacente à une allée (5), et la colonne d'unités de siège (C1) et l'allée (5) s'étendant toutes deux dans une direction longitudinale parallèle à l'axe longitudinal de la cabine d'aéronef,
la colonne (C1) comprenant une multiplicité d'unités de siège, les unités de siège étant agencées consécutivement le long de la direction longitudinale, et dans laquelle chaque unité de siège consécutive alterne entre :
une unité de siège orientée vers l'intérieur (11A) inclinée selon un angle aigu par rapport à l'axe longitudinal de la cabine d'aéronef et orientée vers l'intérieur en direction de l'allée ;
une unité de siège orientée vers l'extérieur (11B) inclinée selon le même angle aigu par rapport à l'axe longitudinal de la cabine d'aéronef mais orientée vers l'extérieur à partir de l'allée ; et
chaque unité de siège est configurable entre une configuration d'assise et une configuration de couchette, et
chaque unité de siège comprend une extrémité de réception de pied (25), l'extrémité de réception de pied (25) étant définie par une structure fixe, et **caractérisée en ce que**,
l'extrémité de réception de pied (25) de chaque unité de siège orientée vers l'intérieur (11A) accueille un accoudoir rétractable (29) qui est configurable entre (i) une position escamotée dans laquelle l'accoudoir (29) est sensiblement à l'intérieur de l'empreinte de l'extrémité de réception de pied et (ii) une position déployée dans laquelle l'accoudoir s'étend vers un côté à partir de l'extrémité de réception de pied, en direction d'une unité de siège orientée vers l'extérieur adjacente, de sorte que l'accoudoir (29) fournisse une surface d'accoudoir destinée à être utilisée par un passager dans l'unité de siège orientée vers l'extérieur adjacente,
dans laquelle l'accoudoir (29) est configuré pour se déplacer entre les positions escamotée et déployée dans un seul plan, et
dans laquelle chaque unité de siège comprend un plateau de siège (17) et l'accoudoir (29) est configuré pour se déplacer entre les positions escamotée et déployée dans un plan qui est au-dessus du plateau de siège de l'unité de siège adjacente.

2. Cabine d'aéronef selon la revendication 1, dans laquelle chaque unité de siège comprend un corps de siège, le corps de siège comprenant des éléments d'assise mobiles (17, 19) agencés de sorte que lorsque l'unité de siège est dans la configuration d'assise, les éléments d'assise forment un siège passager mais lorsque l'unité de siège est dans la configuration de couchette, les éléments d'assise forment une surface de sommeil sensiblement plate.

3. Cabine d'aéronef selon la revendication 2 dans laquelle dans la position déployée, l'accoudoir (29) s'étend en direction du corps de siège de l'unité de siège vers l'extérieur adjacente.

4. Cabine d'aéronef selon une quelconque revendication précédente dans laquelle chaque unité de siège est accessible à partir de l'allée (5) par un trajet d'accès respectif, et dans laquelle dans la position déployée, l'accoudoir (29) de l'extrémité de réception de pied (25) de chaque unité de siège orientée vers l'intérieur s'étend sur le trajet d'accès vers l'unité de siège orientée vers l'extérieur adjacente.

5. Cabine d'aéronef selon une quelconque revendication précédente dans laquelle l'accoudoir est configuré pour être actionnable entre les positions escamotée et déployée par un passager assis dans l'unité de siège orientée vers l'extérieur adjacente.

6. Cabine d'aéronef selon une quelconque revendication précédente dans laquelle l'accoudoir (29) est sollicité en direction de la position escamotée.

7. Cabine d'aéronef selon une quelconque revendication précédente, dans laquelle l'extrémité de réception de pied de chaque unité de siège orientée vers l'extérieur (11b) accueille également un accoudoir rétractable (29), l'accoudoir rétractable étant configurable entre (i) une position escamotée dans laquelle l'accoudoir est sensiblement à l'intérieur de l'empreinte de l'extrémité de réception de pied et (ii) une position déployée dans laquelle l'accoudoir s'étend vers un côté éloigné de l'extrémité de réception de pied, en direction d'une unité de siège orientée vers l'intérieur adjacente, de sorte que l'accoudoir fournisse une surface d'accoudoir destinée à être utilisée par un passager dans l'unité de siège orientée vers l'intérieur adjacente.

8. Cabine d'aéronef selon la revendication 7, dans laquelle chaque unité de siège orientée vers l'intérieur (11a) est sensiblement identique à chaque unité de siège orientée vers l'extérieur.

9. Paire d'unités de siège destinées à être utilisées dans la cabine d'aéronef selon une quelconque revendication précédente, la paire d'unités de siège étant adaptée à être agencée adjacente à une autre paire identique d'unités de siège le long d'une direction longitudinale parallèle à l'axe longitudinal de la cabine d'aéronef, et la paire comprenant :
une unité de siège orientée vers l'intérieur (11a) inclinée selon un angle aigu vers l'axe longitudinal de l'aéronef et orientée vers l'intérieur en direction d'une allée ; et
une unité de siège orientée vers l'extérieur (11b) inclinée selon un angle aigu par rapport à l'axe longitudinal de l'aéronef mais orientée vers l'extérieur à partir de l'allée ; dans laquelle
chaque unité de siège est configurable entre une configuration d'assise et une configuration de couchette, et
chaque unité de siège comprend une extrémité de réception de pied (25), l'extrémité de réception de pied (25) étant définie par une structure fixe, et **caractérisée en ce que**
l'extrémité de réception de pied (25) de chaque unité de siège orientée vers l'intérieur accueille un accoudoir rétractable (29) qui est configurable entre (i) une position escamotée dans laquelle l'accoudoir (29) est sensiblement à l'intérieur de l'empreinte de l'extrémité de réception de pied et (ii) une position déployée dans laquelle l'accoudoir (29) s'étend vers un côté éloigné de l'extrémité de réception de pied, en direction de l'unité de siège orientée vers l'extérieur adjacente, de sorte que l'accoudoir peut fournir une surface destinée à être utilisée par un passager dans l'unité de siège dirigée vers l'extérieur adjacente, et
dans laquelle l'accoudoir (29) est configuré pour se déplacer entre les positions escamotée et déployée dans un seul plan, et
dans laquelle chaque unité de siège comprend un plateau de siège (17) et l'accoudoir (29) est configuré pour se déplacer entre les positions escamotée et déployée dans un plan qui est au-dessus du plateau de siège de l'unité de siège adjacente.
